Europäisches Patentamt

European Patent Office

Office européen des brevets

(11) Veröffentlichungsnummer: **0 217 058**
**A1**

## (12) EUROPÄISCHE PATENTANMELDUNG

(21) Anmeldenummer: 86110611.0

(22) Anmeldetag: 31.07.86

(51) Int. Cl.⁴: **B62D 47/02** , B62D 53/08

(30) Priorität: 04.09.85 DE 3531509
07.05.86 DE 3615433

(43) Veröffentlichungstag der Anmeldung:
08.04.87 Patentblatt 87/15

(84) Benannte Vertragsstaaten:
AT BE CH DE FR GB IT LI NL SE

(71) Anmelder: M A N Nutzfahrzeuge GmbH
Dachauer Strasse 667 Postfach 50 06 20
D-8000 München 50(DE)

(72) Erfinder: Fuchs, Dietrich
Schützenstrasse 19
D-8047 Karlsfeld(DE)

(54) Einknicksicherung für Gelenkfahrzeuge.

(57) Bei einem Gelenkfahrzeug, vorzugsweise einem Gelenkbus, ist konzentrisch zur Schwenkverbindung zwischen den beiden Fahrzeugteilen (1,5) ein horizontaler Zahnkranz (6) fest angebracht, der mit einem Ritzel (9) in Eingriff steht, das auf der Welle (8) einer Verdrängerpumpe (10) sitzt, die fest am anderen Wagenteil (1) angebracht ist, wobei Saug-und Druckanschluß der Verdrängerpumpe (10) durch eine Druckleitung (11) miteinander verbunden sind. Durch Absperren (12, 13) der Druckleitung kann gesteuert dem Abknicken zwischen den Fahrzeugteilen (1,5) entgegengewirkt werden.

Fig. 1

EP 0 217 058 A1

Xerox Copy Centre

Die Erfindung betrifft eine Einknicksicherung für Gelenkfahrzeuge gemäß dem Oberbegriff des Anspruchs 1.

Eine solche Einknicksicherung ist zwischen Vorderwagen und Anhänger eines Sattelzuges, eines Lastzuges, insbesondere aber eines Gelenkomnibusses bekannt und hat den Zweck, einer dynamischen Instabilität entgegenzuwirken und/oder ein Einknicken durch Bremsung/ Beschleunigung zu unterbinden.

Dies ist insbesondere bei sogenannten Schubgelenkbussen der Fall, bei welchen die Achse bzw. Achsen des hinteren Wagens angetrieben werden, welcher dann gewissermaßen den Vorderwagen vor sich herschiebt.

Um in einer solchen Situation dem Abknickvorgang entgegenzuwirken, ist eine Fülle von Einrichtungen vorgeschlagen worden.

Bei einem Gelenkomnibus sind Vorderwagen und Hinterwagen immer durch ein Gelenk miteinander verbunden, welches die ebene Schwenkbewegung um eine vertikale Achse bzw. Hochachse zuläßt.

Es ist nun bekannt, beiderseits dieses Gelenkes die beiden Wagenteile mittels Druckkolben gegeneinander abzustützen, welche beim Beginn eines Einknickvorganges mit hydraulischen Druckströmungsmittel so beaufschlagt werden, daß sie das übergebührliche Einknicken nicht mehr zulassen.

Es ist auch bereits bekannt, am vertikalen Gelenkzapfen, der die beiden Wagenteile miteinander verbindet, Verdrängungsschaufeln anzubringen, welche sich in einem, relativ zu diesen,drehbaren Druckgefäß befinden und dieses in Druckkammern unterteilen, welche ihrerseits über eine Drosselstelle in Eingriff stehen.

Der Nachteil der ersten Anordnung ist jener, daß außerordentlich lange, aufwendige Abstütz-Zylinderkonstruktionen beiderseits der Gelenkverbindung angebracht werden müssen. Hierbei ist der Anbringungsraum infolge des bei Gelenkomnibussen in dieser Zone angeordneten Faltenbalges außerordentlich begrenzt. Ferner liegen Druckzylinder mit ihren Anschlußschläuchen weitgehend frei und sind somit störenden Umgebungseinwirkungen ausgesetzt.

Diesen Nachteilen wird durch eine andere bekannte Einrichtung abgeholfen, welche koaxial zur Gelenkverbindung zwischen den beiden Wagenteilen eine im wesentlichen zylindrische Druckkammer aufweist, die fest mit einem der beiden Wagenteile verbunden ist. In dieser Druckkammer ist eine relativ zu dieser schwenkbar und gegenüber den Wänden der Druckkammer abgedichtete Trennwandanordnung vorgesehen, die beim Verschwenken gegenüber der Druckkammer in dieser gebildete Unterteilungen vergrößert bzw. verkleinert. Die Unterteilungen stehen durch eine gedrosselte Druckleitung in Verbindung.

Der Nachteil der letztgenannten, bekannten Einknicksicherung liegt darin, daß im Bereich des Gelenkes beim Einknickvorgang außerordentlich hohe Drehmomente auftreten, welche ihrerseits zu sehr hohen Drücken innerhalb der kreiszylindrischen Druckkammer bzw. deren Unterteilungen führen, so daß eine sehr präzise und stabile Bauausführung der Einknicksicherung zusammen mit sehr aufwendigen Abdichtungsmaßnahmen erforderlich ist. Ferner sind für diese Einknicksicherung infolge ihres eigentümlichen Aufbaus nur sehr wenige Fertigteile verwendbar.

Ausgehend von diesem Stand der Technik liegt der Erfindung die Aufgabe zugrunde, die letztgenannte Einknicksicherung unter Wahrung ihrer Vorzüge dahingehend weiterzubilden, daß sie weitgehend die Verwendung von Serienteilen zuläßt.

Diese Aufgabe wird erfindungsgemäß durch die Merkmale des Anspruchs 1 gelöst.

Hierbei ist an einem der Wagenteile ein außen- oder innenverzahnter Zahnkranz koaxial zur Hochachse des Gelenks angebracht, während am anderen Fahrzeugteil eine hydraulische Verdrängerpumpe mit vertikal angeordneter Antriebswelle angebracht ist. Auf dieser Antriebswelle sitzt ein Ritzel, welches in den Zahnkranz eingreift. Hierbei erstreckt sich der Zahnkranz mindestens über einen solchen Bogenbereich, daß über den vollen Knickwinkel zwischen den beiden Fahrzeugteilen hinweg stets der Zahnkranz in Eingriff mit dem Ritzel bleibt.

Der Saug-und Druckanschluß der Verdrängerpumpe sind miteinander durch eine mit hydraulischer Flüssigkeit gefüllte Druckleitung verbunden, wobei gemäß einer bevorzugten Ausgestaltung der Erfindung in dieser Druckleitung ein bevorzugt regelbares Absperrventil und/oder regelbares Drosselventil angeordnet sein kann.

Der besondere Vorteil der erfindungsgemäßen Einknicksicherung besteht darin, daß eine serienmäßig hergestellte, für sehr hohe Drücke eingerichtete Verdrängerpumpe verwendet werden kann. Auch die Verzahnung ist aus Serienteilen gebildet, so daß die erfindungsgemäße Einknicksicherung einerseits nahe der Fahrzeugmitte an einer geschützten Stelle angeordnet ist, im Falle eines Gelenkomnibusses etwa unterhalb des Durchganges zwischen den beiden Fahrzeugteilen, während andererseits die erfindungsgemäße Einknicksicherung weitgehend aus einfach beschaffbaren, kostengünstigen Serienteilen gebildet sein kann. Zusätzlich ist etwa im Falle eines Schubgelenkbusses der Anschluß an eine Steuerung oder Regelung problemlos möglich, welche der Lenkwinkel des Vorderwagens und den Knickwinkel zwischen Vorderwagen und Nachläufer als Meßgrößen verarbeitet, wobei die dann in der Druckleitung angebrachten Regulierventile zum Drosseln bzw. Absperren der Strömung des hydraulischen Strömungsmittels von der Druckseite der Verdrängerpumpe zur Saugseite hin ebenfalls von serienmäßigen Regulierventilen gebildet sein können.

Somit kann baukastenartig die erfindungsgemäße Einknickeinrichtung entweder als passive Einknickdämpfung oder als aktive Einknicksicherung ausführbar sein.

Als Verdrängerpumpe kann jeder rotierende Verdrängungskörper vorgesehen werden, etwa eine Zahnradpumpe, wobei die rund um den Verdrängungskörper herum vorliegende, geringfügige Undichtigkeit als Anteil zur Drosselung mit dem Ziel der Dämpfung verwendet wird.

Durch die beschriebene Dämpfungswirkung der Verdrängerpumpe kann auch dann, wenn etwa eine aktiv wirkende Steuerung ein Absperrventil - schließt, das zu abrupte Ansprechen des Fahrzeugs auf Steuervorgänge vermieden werden. Somit kann die Steuerung einfacher aufgebaut werden.

Gemäß einer weiteren Ausgestaltung der Erfindung ist der wirksame Durchmesser des Zahnrades im Verhältnis zu jenem des Zahnkranzes möglichst klein gewählt, so daß bei Einknickvorgängen eine verhältnismäßig hohe Drehzahl und somit auch eine hohe Bremswirkung der Verdrängerpumpe erreicht wird.

Der Gegenstand der Erfindung wird anhand der beigefügten schematischen Zeichnung beispielsweise noch näher erläutert; in dieser zeigt:

Fig. 1 die schematische Draufsicht auf die Gelenkverbindung zwischen Vorderwagen und Hinterwagen eines Gelenkomnibusses, und

Fig. 2 das Prinzipschaltbild der erfindungsgemäßen Einknicksicherung.

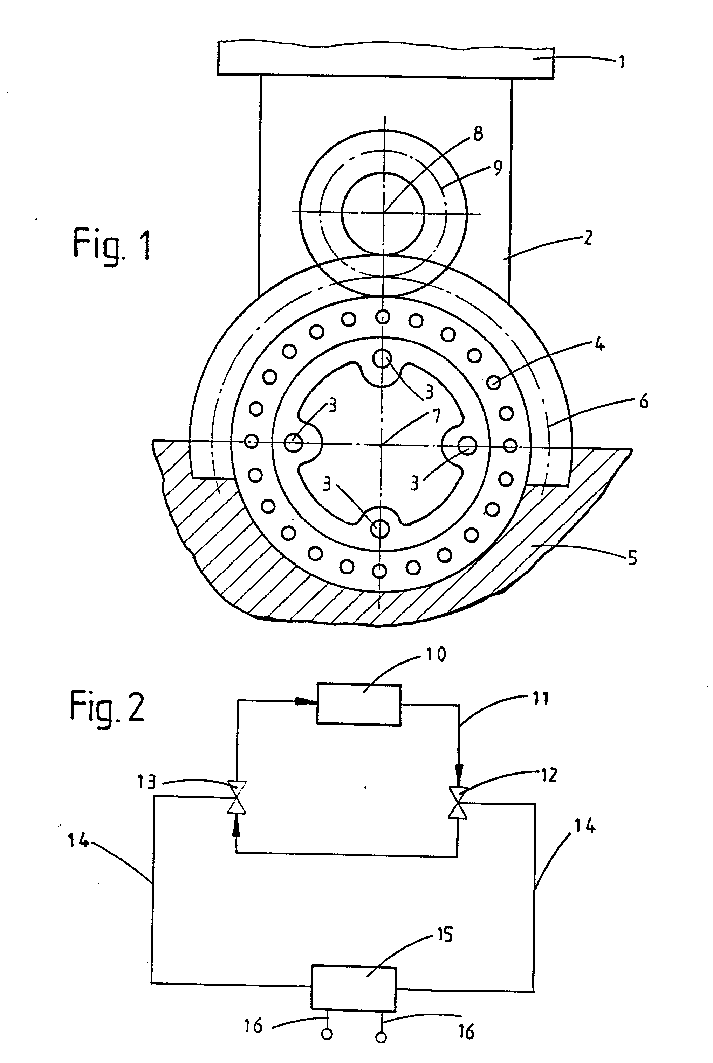

In Fig. 1 ist der hintere Wagenteil eines Vorderwagens 1 schematisch angedeutet, welcher um einen sich mittig und im wesentlichen horizontal nach hinten erstreckenden Träger 2 verlängert ist. Am freien, nicht sichtbaren Ende des Trägers 2 ist mittels Schrauben 3 der Innenkranz eines - schematisch gezeigten Lagers 4 drehfest befestigt.

Der Außenkranz des Lagers 4 ist am vorderen Ende eines nur angedeuteten Hinterwagens 5 drehfest befestigt und trägt mindestens auf seiner dem Vorderwagen 1 zugewandten bogenförmigen Kontur ein Zahnkranzsegment oder einen Zahnkranz, der in einer horizontalen Ebene liegt und die Hochachse 7 zum Mittelpunkt hat, auf welcher auch das Lager 4 zentriert ist. Die Hochachse 7 steht senkrecht zur Zeichenebene und ist somit nur als Spur gezeigt.

An der Verlängerung 2 des Vorderwagens 1 ist eine in Fig. 1 nicht sichtbare hydraulische Verdrängerpumpe so angebracht, daß sich ihre Welle 8 parallel zur Achse 7 erstreckt.

Auf dieser Welle 8 ist drehfest ein Ritzel 9 angebracht, welches in kämmendem Eingriff mit der Verzahnung des Zahnkranzes 6 steht.

Es ist ersichtlich, daß beim Einknicken zwischen Vorderwagen 1 und Hinterwagen 5 um die Hochachse 7 das Ritzel 9 auf der Außenseite des Zahnkranzes 6 abläuft.

In Fig. 2 ist eine dieses Ritzel 9 tragende in Fig. 1 nicht erkennbare Pumpe 10 schematisch dargestellt. Diese Pumpe 10 weist, wie erkennbar, einen Druckausgang und einen Saugeingang - (durch Pfeile bezeichnet) auf, welche beide über eine Verbindungsleitung 11 verbunden sind.

In der Verbindungsleitung 11 ist ein steuerbares Absperrventil 12 sowie, diesem nachgeschaltet, ein regulierbares Drosselventil 13 angebracht. Die Ventile 12, 13 sind über Steuerleitungen 14 mit einer Informations-Verarbeitungseinheit 15 verbunden, welche ihrerseits mit Meßfühlern 16 verbunden ist, die den Knickwinkel und den Lenkwinkel messen, so daß die Steuerung 15 aufgrund der gewonnenen Meßergebnisse zum gezielten Abbremsen der Schwenkbewegung zwischen den Wagenteilen 1 und 2, die Ventile 12 und 13 anzusteuernd imstande ist.

## Ansprüche

1. Einknicksicherung für Gelenkfahrzeuge, die aus einem Vorderwagen und einem Hinterwagen gebildet sind, welche um eine Hochachse - schwenkbar miteinander verbunden sind, wobei an einem der beiden Fahrzeugteile eine Bremseinrichtung angebracht ist, die mit dem anderen Fahrzeugteil zur Abbremsung oder Unterbindung des Abknickvorganges in Eingriff steht, dadurch gekennzeichnet, daß an einem der Wagenteile (1, 5) ein zur Hochachse (7) konzentrisch angeordneter, im wesentlichen horizontaler, kreisbogenförmig ausgebildeter innen-oder außenverzahnter Zahnkranz (6) ausgebildet ist, der mit einem um eine vertikale Achse drehbaren Ritzel kämmt, das auf der Drehwelle (8) einer am anderen Wagenteil (1, 5) angebrachten Verdrängerpumpe (10) sitzt, und daß der Saug-und Druckanschluß der Verdrängerpumpe (10) durch eine Druckleitung (11) miteinander verbunden sind.

2. Einknicksicherung nach Anspruch 1, dadurch gekennzeichnet, daß die Verdrängerpumpe (10) mindestens einen rotierenden Verdrängungskörper aufweist.

3. Einknicksicherung nach einem der Ansprüche 1 oder 2, dadurch gekennzeichnet, daß in der Druckleitung (11) ein steuer-bzw. regelbares Absperr-und/oder Drosselventil (12, 13) angebracht ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 250 547  (MYERS)<br>* Spalte 3, Zeilen 6-45;  Figuren 1, 2 *<br><br>--- | 1-3 | B 62 D  47/02<br>B 62 D  53/08 |
| A | DE-A-3 329 548  (HAMBURGER HOCHBAHN)<br>* Seite  9, Zeile 16 - Seite 10, Zeile 11; Figuren 1, 2 *<br><br>--- | 1-3 | |
| A | DE-A-2 929 022  (M.A.N.)<br>* Ansprüche 1-5; Figur 3 *<br><br>----- | 1-3 | |

| RECHERCHIERTE SACHGEBIETE (Int. Cl.4) |
|---|
| B 62 D  47/00<br>B 62 D  53/00<br>B 60 D   1/00 |

Der vorliegende Recherchenbericht wurde für alle Patentansprüche erstellt.

| Recherchenort | Abschlußdatum der Recherche | Prüfer |
|---|---|---|
| BERLIN | 28-11-1986 | KRIEGER R. O |